# EUROPÄISCHE PATENTANMELDUNG

(11) **EP 2 449 892 A2**
(43) Veröffentlichungstag der Anmeldung: **09.05.2012**
(21) Anmeldenummer: 11008698.0
(22) Anmeldetag: 29.10.2011
(51) Int. Cl.: A23L 1/325, A23B 4/044

(54) **Geräuchertes Fischfilet**

(30) Priorität: 04.11.2010 DE 202010015128 U
(71) Anmelder: "Deutsche See" GmbH, 27572 Bremerhaven (DE)
(72) Erfinder: Volkert, Martin, 27721 Ritterhude (DE)
(74) Vertreter: Schildberg, Peter

(57) **Zusammenfassung**

Geräuchertes Fischfilet, das auf einer Flachseite eine durchgehende Fischhaut aufweist, dadurch gekennzeichnet, dass auf der von der Haut abgewandten Seite Schnitte in dem Fischfilet vorgesehen sind, die sich quer zu einer Längsrichtung des Fischfilets erstrecken, und jeder der Schnitte einen Neigungswinkel aufweist, um den der Schnitt gegenüber der Flachseite geneigt ist.

## Beschreibung

Die vorliegende Erfindung betrifft ein geräuchertes Fischfilet, das auf einer Flachseite eine durchgehende Fischhaut aufweist.

Aus DE 617 003 T2 ist eine Schneidemaschine für Lebensmittel, insbesondere für geräucherten Lachs bekannt. Die bekannte Schneidevorrichtung ist so ausgebildet, dass die Schnittstärke und die Neigung in Bezug auf die Schnittebene des zu schneidenden Produktes regelbar sind, wobei diese Regelung ausreichend schnell ist, so dass sie beim Herstellen von Schnitten nach Bedarf zwischen zwei Schnittvorgängen und in der Abfolge eines industriellen Schneidens durchgeführt werden kann.

Aus US 2005/0048173 A1 ist ein Verfahren zum Räuchern von Fisch bekannt. Hierbei wird das zu räuchernde Fischfilet mit senkrechten Einschnitten versehen und auf eine gebogene Spannvorrichtung an beiden Enden über Haken befestigt.

Der Erfindung liegt die Aufgabe zugrunde, ein geräuchertes Fischfilet bereitzustellen, das sich durch eine besonders intensive Raucharomaaufnahme auszeichnet.

Erfindungsgemäß wird die Aufgabe durch ein geräuchertes Fischfilet mit den Merkmalen aus Anspruch 1 gelöst. Vorteilhafte Ausgestaltungen bilden den Gegenstand der Unteransprüche.

Das erfindungsgemäß geräucherte Fischfilet besitzt auf einer Flachseite eine durchgehende Fischhaut. Auf der von der Haut abgewandten Flachseite des Fischfilets sind Schnitte in dem Fischfleisch vorgesehen, die sich quer zu einer Längsrichtung des Fischfilets erstrecken. Die Längsrichtung des Fischfilets erstreckt sich von der Schwanzseite bis zur Kopfseite des Fischfilets. Jeder der Schnitte besitzt einen spitzen Neigungswinkel, um den der Schnitt gegenüber der Flachseite geneigt ist. Das geräucherte Fischfilet mit den erfindungsgemäß geneigten Schnitten ermöglicht eine Raucharomaaufnahme auch im Bereich der Schnittflächen, so dass insgesamt eine intensivere Rauchaufnahme erfolgt. Die Neigung des Schnittwinkels ermöglicht es, das Fischfilet bei einer hängenden Räucherung derart zu hängen, dass entgegen der Neigung der Schnittwinkel das Fischfilet im Bereich der Schnitte aufklappt und so die Aufnahme von Raucharoma erfolgen kann. Das hängende Fischfilet ist für die Räucherung derart aufgehängt, dass unter Einwirkung der Schwerkraft die Schnitte aufklappen und Schnittflächen freilegen. Der Schnitt erstreckt sich dafür bevorzugt über die gesamte Breite des Fischfilets.

In einer bevorzugten Ausgestaltung besitzen die Schnitte einen vorbestimmten Abstand zueinander. Der Abstand beträgt zweckmäßiger Weise 2 bis 5 cm, bevorzugt 3 bis 4 cm. Durch die Abstände ist es möglich, dass eine gleichmäßige Rauchaufnahme und damit Aromaaufnahme in dem Fischfilet zu erzielen.

Es hat sich als besonders zweckmäßig herausgestellt, den Neigungswinkel der Schnitte ungefähr gleich zu wählen. Dies bedeutet, dass ein gleicher Neigungswinkel für den Schnitt unabhängig von der Dicke des Fischfilets gewählt wird. Um im hängenden Zustand des Fischfilets ein gutes Aufklappen und Freiliegen der Schnittfläche zu erzielen, haben sich Neigungswinkel von 25° bis 65°, bevorzugt von 40° bis 60° als vorteilhaft erwiesen.

Um ein besonders weites Aufklappen zu erreichen, besitzen die Schnitte eine möglichst große Schnitttiefe, die im Wesentlichen bis zur Haut reicht.

Das geräucherte Fischfilet hat sich als besonders vorteilhaft bei Lachsfilet und hier insbesondere bei IKARIMI-Lachsfilet erwiesen.

Die Schnitte im Fischfilet erstrecken sich bevorzugt über die gesamte Breite des Fischfilets, so dass im hängenden Zustand ein vollständiges Aufklappen erfolgt.

Aufgrund der Struktur des Fischfilets hat es sich als vorteilhaft erwiesen, wenn die Schnitte von der Kopfseite des Fischfilets fort geneigt sind. Um das Fischfilet in seinem aufgeklappten Zustand aufhängen zu können, besitzt das Fischfilet an seinem schwanzseitigen Ende ein bandförmiges Aufhängemittel bevorzugt mit einer Öse.

Die Erfindung wird nachfolgend anhand der Figuren näher erläutert. Es zeigt:
Fig. 1 eine Ansicht des Fischfilets mit den erfindungsgemäßen Schnitten und
Fig. 2 eine Detailansicht von der Seite.

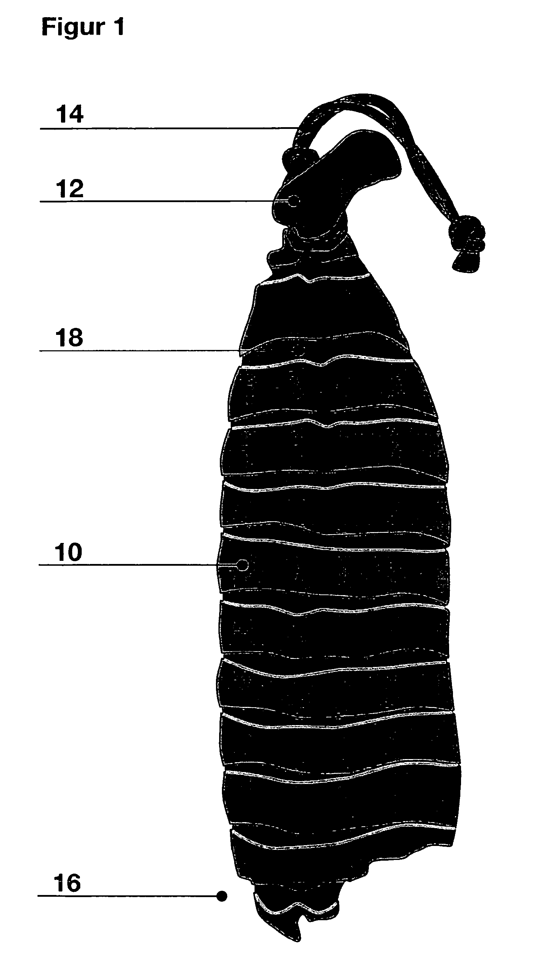

Fig. 1 zeigt ein stremelartiges Lachsfilet 10, das auf seiner Hautseite liegt, mit der Filetseite zum Betrachter. An dem Schwanzende 12 des Lachsfilets ist eine Kordel 14 zu erkennen, mit der das Filet zum Trocknen und Räuchern aufgehängt werden kann. Entlang der Längsrichtung, die sich von der Schwanzseite 12 zu der Kopfseite 16 erstreckt, sind Schnitte 18 vorgesehen, die senkrecht zur Längsrichtung verlaufen. In der dargestellten Position des Lachsfilets in Fig. 1 sind die Schnitte insbesondere im Bereich des Schwanzes aufgeklappt, so dass die Schnittflächen freiliegen.

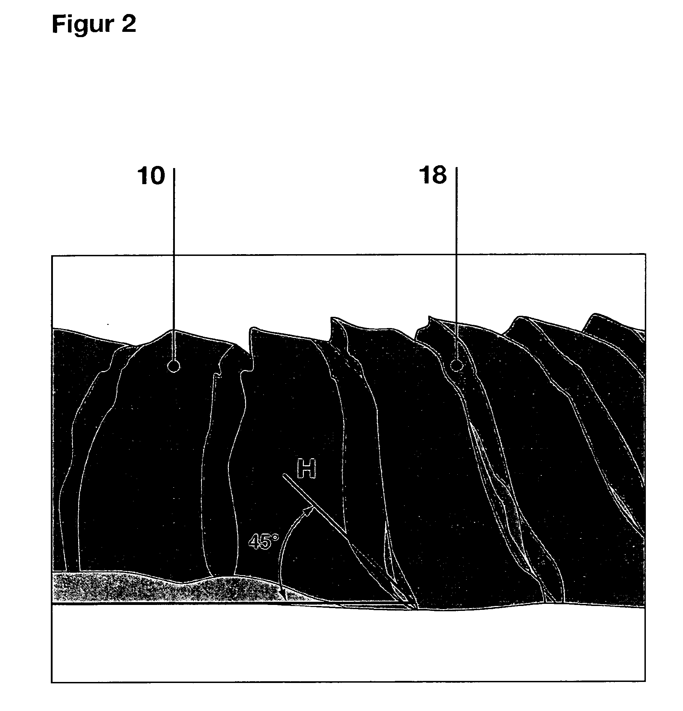

Fig. 2 zeigt eine Ansicht des Fischfilets 10 von der Seite, in der die Schnitte 18 zur besseren Rauchaufnahme aufgeklappt sind. Die Schnitte 18 besitzen eine Neigung von ungefähr 45°, die durch die Hilfslinie H in der Figur eingezeichnet ist. Im zugeklappten Zustand der Schnitte verläuft der Schnitt entlang der Linie H. Im aufgeklappten Zustand klappen die geschnittenen Streifen bis in eine nahezu senkrechte Position auf, so dass ein breiter Abstand zwischen benachbarten Streifen entsteht und die Schnittflächen freiliegen.

## Patentansprüche

1. Geräuchertes Fischfilet, das auf einer Flachseite eine durchgehende Fischhaut aufweist, **dadurch gekennzeichnet, dass**
auf der von der Haut abgewandten Seite Schnitte in dem Fischfilet vorgesehen sind, die sich quer zu einer Längsrichtung des Fischfilets erstrecken, und
jeder der Schnitte einen Neigungswinkel aufweist, um den der Schnitt gegenüber der Flachseite geneigt ist.

2. Fischfilet nach Anspruch 1, **dadurch gekennzeichnet, dass** die Schnitte einen vorbestimmten Abstand zueinander aufweisen.

3. Fischfilet nach Anspruch 1 oder 2, **dadurch gekennzeichnet, dass** der Abstand zwischen den Schnitten 2 bis 5 cm, bevorzugt 3 bis 4 cm beträgt.

4. Fischfilet nach einem der Ansprüche 1 bis 3, **dadurch gekennzeichnet, dass** die Neigungswinkel ungefähr gleich sind.

5. Fischfilet nach einem der Ansprüche 1 bis 4, **dadurch gekennzeichnet, dass** die Neigungswinkel eine Größe von 25° bis 65°, bevorzugt von 40° bis 50° aufweisen.

6. Fischfilet nach einem der Ansprüche 1 bis 5, **dadurch gekennzeichnet, dass** die Schnitte im Wesentlichen bis zur Haut reichen.

7. Fischfilet nach einem der Ansprüche 1 bis 6, **dadurch gekennzeichnet, dass** ein Lachsfilet als Fischfilet vorgesehen ist.

8. Fischfilet nach Anspruch 7, **dadurch gekennzeichnet, dass** ein IKARIMI-Lachsfilet als Lachsfilet vorgesehen ist.

9. Fischfilet nach einem der Ansprüche 1 bis 8, **dadurch gekennzeichnet, dass** die Schnitte sich über die gesamte Breite des Fischfilets erstrecken.

10. Fischfilet nach einem der Ansprüche 1 bis 9, **dadurch gekennzeichnet, dass** die Schnitte von der Kopfseite des Fischfilets fort geneigt sind.

11. Fischfilet nach einem der Ansprüche 1 bis 10, **dadurch gekennzeichnet, dass** am schwanzseitigen Ende des Fischfilets ein bandförmiges Aufhängemittel vorgesehen ist.
